# EUROPÄISCHE PATENTSCHRIFT

(11) **EP 3 045 330 B1**
(45) Veröffentlichungstag und Bekanntmachung des Hinweises auf die Patenterteilung: **18.10.2017**
(21) Anmeldenummer: 15151450.2
(22) Anmeldetag: 16.01.2015
(51) Int. Cl.: B60D 5/00

(54) **Zwischen zwei gelenkig miteinander verbundenen Fahrzeugteilen angeordnete balgartige Seitenschutzwand, wobei die Seitenschutzwand an den gelenkig miteinander verbundenen Fahrzeugteilen anordbar ist**
Bellows-type side protection wall between two vehicle sections with a jointed connection arranged, wherein the side protection wall can be connected to the vehicle section connected with a jointed connection
Paroi de protection latérale à soufflet disposée entre deux éléments de véhicule reliés entre eux de manière articulée, la paroi de protection latérale pouvant être agencée sur les éléments de véhicule reliés entre eux de manière articulée

(43) Veröffentlichungstag der Anmeldung: 20.07.2016
(73) Patentinhaber: Hübner GmbH & Co. KG, 34123 Kassel (DE)
(72) Erfinder: Zolotov, Roman, 34123 Kassel (DE); Eckert, Michael, 34132 Kassel (DE); Missal, Konstantin, 34125 Kassel (DE); Lehn, Friedrich, 34253 Lohfelden (DE)
(74) Vertreter: Patentanwälte Walther Hinz Bayer PartGmbB

(56) Entgegenhaltungen:
- EP-A1- 1 878 632
- EP-A1- 2 236 382
- WO-A1-2011/036657

## Beschreibung

Die Erfindung betrifft eine zwischen zwei gelenkig miteinander verbundenen Fahrzeugteilen angeordnete balgartige Seitenschutzwand, wobei die Seitenschutzwand an den gelenkig miteinander verbundenen Fahrzeugteilen anordbar ist.

Sogenannte Seitenschutzwände sind aus dem Stand der Technik hinreichend bekannt. Diesbezüglich wird beispielhaft verwiesen auf die EP 23 22 263 B1 oder auch die EP 24 55 242 B1. Bei gelenkig miteinander verbundenen Fahrzeugteilen befindet sich dann, wenn ein Hinüberwechseln von Personen von dem einen Fahrzeug in das andere Fahrzeugteil gewährleistet sein soll, zwischen den beiden Fahrzeugteilen ein sogenannter Übergang. Ein solcher Übergang umfasst eine Übergangsbrücke oder Übergangsplattform sowie einen die Übergangsbrücke oder Übergangsplattform tunnelförmig umspannender Balg. Der Balg ist häufig von der Seitenwand des Fahrzeugs nach innen abgesetzt, weshalb die Gefahr besteht, dass Personen in den Zwischenraum zwischen den beiden Fahrzeugteilen auf das Gleisbett gelangen können. Um dies zu verhindern dient die Seitenschutzwand, die im Bereich der Wagenkastenwandung der Fahrzeugteile die beiden Fahrzeugteile miteinander verbindet.
Grundsätzlich finden sich solche Seitenschutzwände allerdings nicht nur bei durch mit Übergängen verbundenen Fahrzeugteilen, sondern auch bei Fahrzeugteilen, insbesondere von Schienenfahrzeugen, bei denen ein Hinüberwechseln von Personen zwischen den einzelnen Fahrzeugteilen nicht möglich ist. Hier besteht noch in einem viel größeren Maße, als im Falle der Verbindung der Fahrzeugteile durch einen Übergang, die Gefahr, dass Personen in den Raum zwischen zwei gelenkig miteinander verbundenen Fahrzeugteilen gelangen.

Eine Seitenschutzwand, die den Oberbegriff des Anspruchs 1 offenbart, wird in der EP 2 236 382 A1 gezeigt.

Seitenschutzwände dienen allerdings nicht nur dem Personenschutz, wie zuvor beschrieben, sondern dienen schlussendlich auch der Abdeckung von Versorgungsleitungen, die zwischen dem eigentlichen Übergang und der Wagenkastenseitenwand verlaufen, beispielsweise von Druckluftleitungen, Hydraulikleitungen oder auch Klimaleitungen. Darüber hinaus decken sie, da sie häufig das Dach insbesondere eines Schienenfahrzeuges, z. B. einer Straßenbahn, überragen, den Dachbereich des Übergangs mit ab, da auch hier noch Versorgungsleitungen zwischen den beiden Fahrzeugteilen geführt werden, die nach außen hin nicht sichtbar sein sollen. Allerdings hat die Seitenschutzwand nicht nur die Aufgabe als Sichtschutz zu fungieren, sondern auch zu verhindern, dass Personen in diesen Bereich des Fahrzeugs, also in den Bereich der Führung von Versorgungsleitungen zwischen den beiden Fahrzeugteilen zu gelangen, um dort Schaden anzurichten oder sich gar selbst zu verletzen. Darüber hinaus wurde von verschiedenen Betreibern von Schienenfahrzeugen die Forderung aufgestellt, eine Klappleiter vorzusehen, um Wartungspersonal das Besteigen des Dachbereichs von Waggons zu ermöglichen. Bislang werden diese Leitern an der Stirnwand des Fahrzeugteiles angeordnet, und sind mit einem mechanischen Schloss gegen unbefugte Benutzung gesichert.
Geht man davon aus, dass die Seitenschutzwand zusätzlich zu einem Übergang an der Stirnseite zwischen zwei gelenkig miteinander verbundenen Fahrzeugteilen befestigt wird, dann ist der restliche Bauraum äußerst knapp bemessen. Dies insbesondere dann, wenn, wie bereits an anderer Stelle erwähnt, die Klappleiter an der Stirnwand des Fahrzeugteiles befestigt werden soll.
Die der Erfindung zugrunde liegende Aufgabe besteht demzufolge darin, zu gewährleisten, dass auch auf einfache Art und Weise die Seitenschutzwand mit der Stirnwand des Fahrzeugs verbindbar ist.
Zur Lösung der Aufgabe wird erfindungsgemäß vorgeschlagen, dass die Stirnseite der Seitenschutzwand durch eine Führungseinrichtung vertikal beweglich mit der Schwenkeinrichtung in Verbindung bringbar ist, wobei durch die Schwenkeinrichtung die Stirnseite der Seitenschutzwand auf die Stirnwand des Fahrzeugs zubewegbar ist, und die Stirnseite der Seitenschutzwand durch eine Verriegelungseinrichtung mit der Stirnwand des Fahrzeugteils verbindbar ist.

Wie bereits ausgeführt, ist eine Schwenkeinrichtung zwischen der Stirnseite der Seitenschutzwand und der Stirnwand des benachbarten Fahrzeugteils vorgesehen. Mithilfe der Schwenkeinrichtung kann von unten, das heißt, beispielsweise von der Bahnsteigkante oder vom Boden aus, die Seitenschutzwand mit ihrem einem Ende in den Bereich der Stirnwand des Fahrzeugteiles gebracht werden. Dies ohne einen übermäßig hohen Kraftaufwand.

Nach einem weiteren vorteilhaften Merkmal der Erfindung ist vorgesehen, dass die Schwenkeinrichtung mindestens einen im Einbauzustand vertikal ausgerichteten Holm umfasst, der durch mindestens zwei Sprossen mit der Stirnwand des Fahrzeugteiles in Verbindung steht. Hierbei sind die Sprossen sowohl an dem Holm als auch an der Stirnwand des entsprechenden Fahrzeugteils gelenkig angeordnet. Hieraus wird deutlich, dass die Schwenkeinrichtung nach Art einer Leiter entsprechend einem Vier- oder Vielgelenk ausgebildet ist, sodass die Möglichkeit für das Wartungspersonal besteht, dass Wagendach über eine solche als Schwenkeinrichtung ausgebildete Leiter zu besteigen. Das heißt, dass in den Abstand zwischen den beiden Fahrzeugteilen nicht nur die Seitenwand untergebracht werden kann, sondern darüber hinaus auch noch die als Leiter fungierende Schwenkeinrichtung, sodass es nicht mehr erforderlich ist, eine gesonderte Leiter im Bereich der Stirnwand des Fahrzeugteils, also beispielsweise zwischen Übergang und Seitenschutzwand, vorzusehen. Zur Betätigung der Schwenkeinrichtung wird der Holm im Einbauzustand nach oben verschwenkt und zwar um die Sprossen herum. Bei zwei Sprossen könnte man hier von einem Viergelenk sprechen, wobei der Holm die Kurbel und die Sprossen die Schwingen bilden.

Bei Verschwenkung des Holmes mit angelenkter Seitenschutzwand erfolgt üblicherweise ein Versatz der Seitenschutzwand in vertikaler Richtung nach oben. Um diesen Höhenversatz zu kompensieren, ist eine Führungseinrichtung vorzusehen, die die Seitenschutzwand mit ihrem stirnseitigen Ende vertikal beweglich aufnimmt, sodass nach Abschluss der Schwenkbewegung die Seitenschutzwand tatsächlich parallel zwischen den beiden Fahrzeugteilen verläuft. Des Weiteren ist eine Verriegelungseinrichtung vorgesehen, um die Stirnseite der Seitenschutzwand mit der Stirnwand des Fahrzeugteiles zu verbinden.

Um die Schwenkeinrichtung tatsächlich als Leiter im eigentlichen Sinn nutzen zu können, ist nach einem weiteren Merkmal der Erfindung vorgesehen, dass mindestens eine Sprosse, vorzugsweise allerdings mindestens eine Mehrzahl der übereinander angeordneten Sprossen, durch mindestens einen Anschlag in horizontaler Position fixierbar ist. Hieraus wird deutlich, dass die Schwenkeinrichtung als Leiter im Einbauzustand eine Stellung einnimmt, bei der die Sprossen horizontal verlaufen. Dies wird, wie bereits ausgeführt, dadurch erreicht, dass zumindest eine Sprosse, die mit ihren Enden schwenkbeweglich mit der Stirnwand des Fahrzeugteils und dem Holm verbunden ist, und vorzugsweise an beiden Enden gegen einen Anschlag an der Stirnwand und dem Holm stößt, um, wie bereits ausgeführt, die Sprossen der Leiter in ausgeklappter Position der Leiter bzw. der Schwenkeinrichtung in horizontaler Position zu halten. Vorzugsweise ist in diesem Zusammenhang vorgesehen, dass eine jede Sprosse im Bereich der Stirnwand und des Holmes an einen entsprechenden Anschlag stößt, um der Schwenkeinrichtung als Leiter die entsprechende Stabilität zu vermitteln.

Es wurde bereits darauf hingewiesen, dass die Stirnseite der Seitenschutzwand durch eine Führungseinrichtung vertikal beweglich mit der Schwenkeinrichtung in Verbindung bringbar ist. Die Führungseinrichtung umfasst im Einzelnen zur Verbindung der Stirnseite der Seitenschutzwand mit der Schwenkeinrichtung ein erstes im Bereich der Stirnseite der Seitenschutzwand angeordnetes Führungsglied, wobei das erste Führungsglied durch ein an der Schwenkeinrichtung angeordnetes zweites Führungsglied vertikal beweglich aufnehmbar ist. Hierbei kann das erste Führungsglied als Führungsstange ausgebildet sein, und das zweite Führungsglied als Führungsöse, sodass die Führungsstange in der Führungsöse vertikal verschieblich geführt ist, wobei die Stange eine Länge aufweist, die ausreichend ist sicherzustellen, dass die Stange zum einen während der Schwenkbewegung nicht aus dem Bereich der Führungsöse gelangt und zum anderen auch im geschlossenen Zustand der Seitenschutzwand in der Führungsöse verbleibt.

Alternativ ist auch eine Ausführungsform denkbar, bei der das erste Führungsglied als nach unten geschlossener Bügel ausgebildet ist, und das zweite Führungsglied als Führungsöse, die auf- und zuklappbar ist. Hierdurch wird erreicht, dass der Bügel zwar vertikal beweglich in der Führungsöse ist, aber nicht versehentlich herausgelangen kann. Zur Montage dient dann die auf- und zuklappbare Führungsöse.

Bereits zu eingangs ist darauf hingewiesen worden, dass durch die Schwenkeinrichtung die Stirnseite der Seitenschutzwand auf die Stirnwand des Fahrzeugteils zu bewegbar ist. Im an der Stirnseite anliegenden Zustand ist die Stirnseite der Seitenschutzwand durch eine Verriegelungseinrichtung mit der Stirnwand des Fahrzeugteils verbindbar. In diesem Zusammenhang ist im Einzelnen in Bezug auf die Verriegelungseinrichtung vorgesehen, dass diese mehrere an der Stirnseite der Seitenschutzwand übereinander angeordnete Zentrierhaken aufweist, die mit entsprechenden Zentrierösen an der Stirnwand des Fahrzeugteils in Eingriff bringbar sind. Hieraus wird deutlich, dass über die Höhe der Seitenschutzwand die Seitenschutzwand eine Mehrzahl von Zentrierhaken aufweist, die in die entsprechenden Ösen einführbar sind. Dies geschieht im Einzelnen dadurch, dass die Seitenschutzwand dann, wenn sie sich im Wesentlichen unmittelbar an der Stirnwand des Fahrzeugteils befindet, an ihrer Unterseite kurz angehoben wird, um dann die Zentrierhaken in die entsprechenden Zentrierösen hineinfallen zu lassen. Nach einem besonderen Merkmal der Erfindung ist in diesem Zusammenhang vorgesehen, dass die Verriegelungseinrichtung eine Sensorüberwachung umfasst. Das heißt, es wird erfasst, ob die Zentrierhaken mit den entsprechenden Zentrierösen in Eingriff stehen. Somit ist sichergestellt, dass sich das aus mehreren gelenkig miteinander verbundenen Fahrzeugteilen bestehende Gelenkfahrzeug erst dann in Bewegung setzen kann, wenn tatsächlich die Seitenschutzwand geschlossen ist. Die Schwenkvorrichtung selbst kann zusätzlich durch Bolzen in eingeklappter Position gehalten werden.

Nach einem weiteren Merkmal der Erfindung ist vorgesehen, dass die Seitenschutzwand in der Geschlossenstellung durch eine Arretiereinrichtung in dieser Position fixierbar ist. Es wurde bereits zuvor darauf hingewiesen, dass die Zentrierhaken mit den Zentrierösen in Eingriff bringbar sind. Um nun zu verhindern, dass die Zentrierhaken aus den Zentrierösen während der Fahrt herausgelangen können, ist die Arretiereinrichtung vorgesehen. Die Arretiereinrichtung umfasst im Einzelnen eine Lasche und einen verschwenkbaren Riegel, die miteinander in Eingriff bringbar sind. Hierbei befindet sich vorzugsweise der verschwenkbare Riegel an der Stirnwand des Fahrzeugteiles und kann in den Bereich der Lasche verschwenkt werden, die sich an der Stirnseite der Seitenschutzwand befindet, wobei der Riegel auf der Lasche aufliegt, sodass ein Abheben der Seitenschutzwand nicht möglich ist. Auch die Arretiereinrichtung besitzt eine Sensorüberwachung für die Arretierung der Lasche durch den Riegel. Hieraus wird deutlich, dass in Geschlossenstellung der Seitenschutzwand eine Überwachung in zweierlei Hinsicht erfolgt, nämlich zum einen der Eingriff der Zentrierhaken in die Zentrierösen und zum anderen die Arretierung der Seitenschutzwand durch den Riegel in Verbindung mit der Lasche.

An dieser Stelle sei darauf hingewiesen, dass die Schwenkeinrichtung nicht nur einen Holm umfassen kann, sondern zwei parallel zueinander verlaufende Holme, aber der eine Holm an der Stirnwand des Fahrzeugs befestigt sein kann. Diese Ausführungsform hat den Vorteil, dass die Seitenschutzwand einschließlich der Schwenkeinrichtung als komplette Baugruppe in den Zwischenraum zwischen den beiden Fahrzeugteilen eingebaut werden kann, mithin bestehende Fahrzeuge, ohne dass, bis auf Befestigungsbohrungen. irgendwelche Änderungen an den Fahrzeugteilen vorgenommen werden müssen, nachgerüstet werden können.

Nach einem weiteren besonderen Merkmal ist vorgesehen, dass der Holm, der benachbart zu der Stirnseite zur Seitenschutzwand liegt, einen nach unten ausgerichteten Verlängerungsabschnitt aufweist, dessen Länge etwa dem vertikalen Versatz nach dem Verschwenken des Holms der Schwenkeinrichtung entspricht. Dieser Verlängerungsabschnitt dient der Aufnahme einer unteren Sprosse, die an dem Holm ausklappbar angeordnet ist, und das Besteigen der als Leiter ausgebildeten Schwenkeinrichtung für das Wartungspersonal erleichtern soll.

Anhand der Zeichnungen wird die Erfindung beispielhaft näher erläutert.
- Fig. 1: zeigt ein aus zwei Fahrzeugteilen bestehendes Gelenkfahrzeug als Schienenfahrzeug;
- Fig. 2: zeigt einen Schnitt gemäß der Linie II-II aus Fig. 1;
- Fig. 3: zeigt den Bereich des Übergangs in schematischer Darstellung in einer Seitenansicht, wobei die Seitenschutzwand noch nicht mit dem zweiten Fahrzeugteil verbunden ist;
- Fig. 4: zeigt eine Darstellung gemäß Fig. 3, wobei die Führungseinrichtung mit der Schwenkeinrichtung in Verbindung steht und wobei der rechte Fahrzeugteil weggelassen worden ist;
- Fig. 5: zeigt eine Darstellung gemäß Fig. 3, bei der die Zentrierhaken im Eingriff mit den Zentrierösen stehen;
- Fig. 6: zeigt eine Darstellung gemäß Fig. 5, bei der der Riegel im Eingriff mit der Lasche steht, um ein Ausheben der Seitenwand zu verhindern;
- Fig. 7: zeigt schematisch den Anschlag, um die Sprosse in horizontaler Position zu halten.

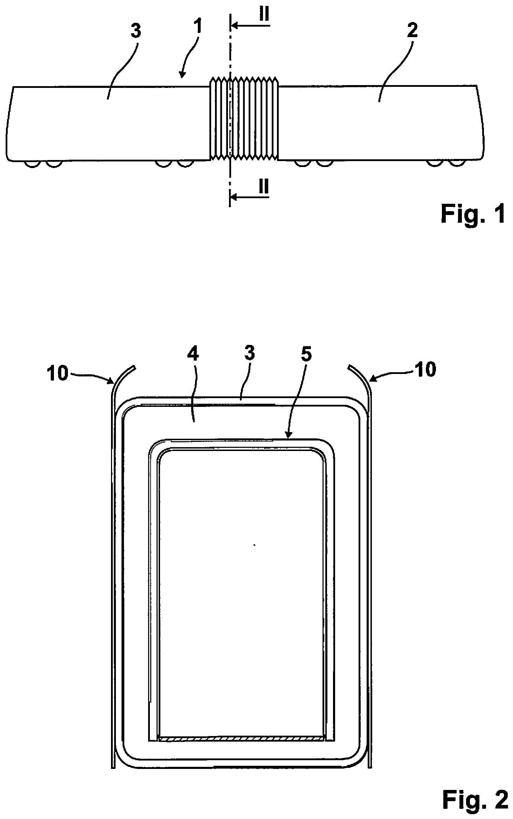

Das mit 1 bezeichnete Gelenkfahrzeug umfasst die beiden Fahrzeugteile 2 und 3, die durch einen Übergang 5 (siehe Fig. 2) miteinander verbunden sind, und wobei im Bereich der Außenwandung der Fahrzeugteile zu beiden Seiten jeweils eine Seitenschutzwand 10 vorgesehen ist. Gegenstand der Erfindung ist nun die Ausgestaltung der Seitenschutzwand 10 und deren Verbindung mit der Stirnwand 4 des Fahrzeugteiles 3.

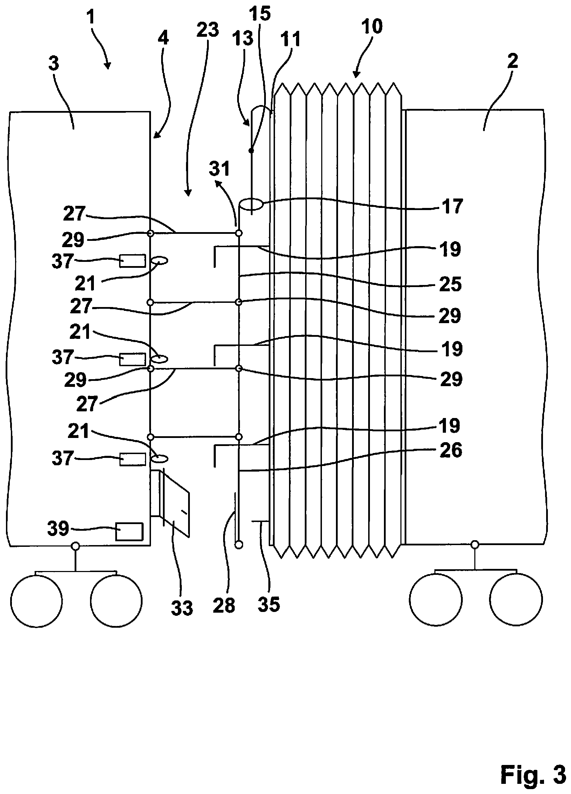

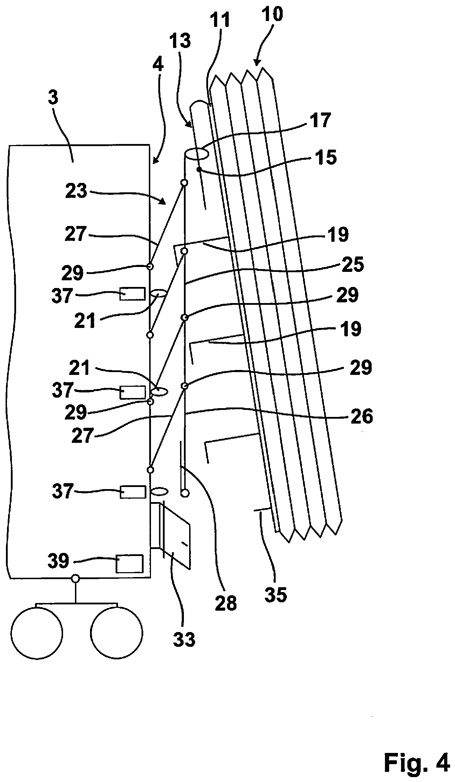

Betrachtet man nunmehr die Fig. 3, so erkennt man wiederum die beiden Fahrzeugteile 2 und 3 des Gelenkfahrzeugs 1. Der Übergang 5, der noch in Fig. 2 erkennbar ist, ist der besseren Übersichtlichkeit wegen in Fig. 3 und den folgenden Figuren 4 bis 6 nicht dargestellt.

Die mit 10 bezeichnete Seitenschutzwand ist als Faltenwand ausgebildet, und besitzt an ihrem stirnseitigen Ende den Rahmen 11. An dem Rahmen 11 befindet sich die insgesamt mit 13 bezeichnete Führungseinrichtung, wobei die Führungseinrichtung 13 eine Führungsstange 15 und die Führungsöse 17 umfasst. Im vorliegenden Fall befindet sich die Führungsstange 15 bereits im Bereich der Führungsöse 17.
Der Rahmen 11 der Seitenschutzwand 10 zeigt darüber hinaus drei übereinander angeordnete Zentrierhaken 19, die in Eingriff mit den an der Stirnwand 4 des Fahrzeugteiles 3 angeordneten Zentrierösen 21 bringbar sind, wie sich das im Folgenden in Anschauung der Figuren 4 bis 6 im Einzelnen ergibt.

Die nach Art einer Leiter ausgebildete Schwenkeinrichtung 23 umfasst den Holm 25, wobei sich der Holm 25 parallel zur Stirnwand 4 des Wagenkastens 3 erstreckt, wie sich dies unmittelbar Fig. 3 entnehmen lässt. Der Holm 25 steht mit der Stirnwand 4 des Wagenkastens 3 durch die Mehrzahl an übereinander angeordneten Sprossen 27 in Verbindung. Eine jede Sprosse 27 ist hierbei zu beiden Enden durch jeweils ein Gelenk 29 einerseits mit dem Holm 25 und andererseits mit der Stirnwand 4 des Fahrzeugs verbunden.

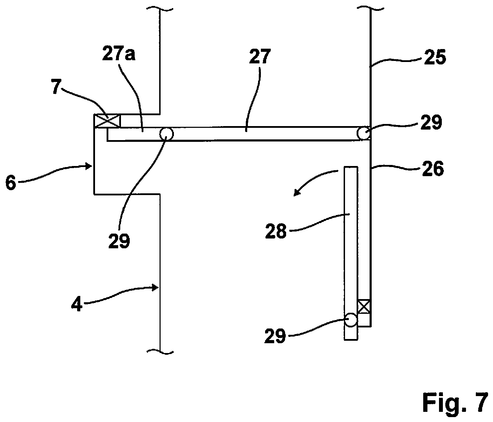

Fig. 7 zeigt in diesem Zusammenhang schematisch, wie die Sprosse 27 in horizontaler Position gehalten werden kann. Hierbei zeigt die Sprosse 27 einen Überstand 27a hinter dem Gelenk 29, z. B. im Bereich der Aussparung 6 in der Stirnwand 4. In der Aussparung 6 befindet sich der Anschlag 7, an den die Sprosse mit dem Überstand 27a anstößt. Ähnlich erfolgt die Fixierung der ausklappbaren Sprosse 28 an dem Verlängerungsabschnitt 26 in horizontaler Position der ausklappbaren Sprosse 28.

Der Holm 25 der Schwenkeinrichtung 23 ist in Richtung des Pfeiles 31 in Richtung auf die Stirnwand 4 des Fahrzeugteiles 3 verschwenkbar. Die Stirnwand 4 des Fahrzeugteils 3 zeigt darüber hinaus den mit 33 bezeichneten Riegel, der mit der mit 35 bezeichneten Lasche zusammenarbeitet, wie dies im Einzelnen nachstehend anhand der Figuren 4 bis 6 erläutert wird.

Betrachtet man nunmehr die Fig. 4, so erkennt man, dass der Holm 25 in Richtung des Pfeiles 31 verschwenkt ist. Die mit 13 bezeichnete Führungseinrichtung umfasst, wie bereits ausgeführt, die Führungsstange 15 und die Führungsöse 17. Da der Holm 25 bereits verschwenkt ist, ist das vordere Ende der Seitenschutzwand 10 leicht schräg stehend auf das Fahrzeugteil 3 zugerichtet.

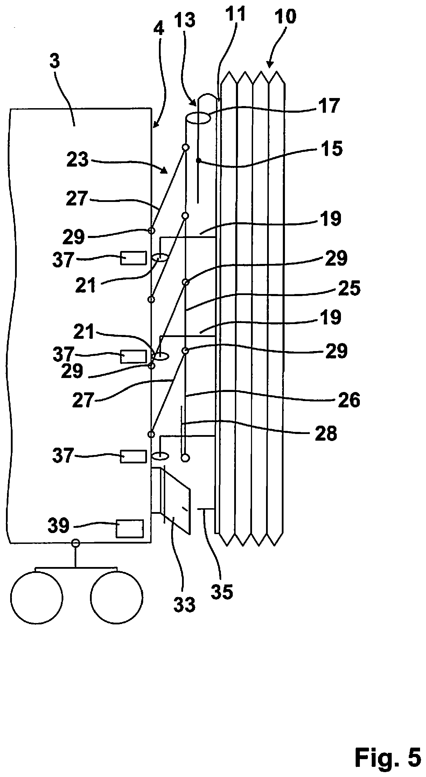

Um die Seitenwand in die Stellung gemäß der Fig. 5 zu überführen, wird die Seitenschutzwand 10 unten etwas angehoben und auf die Stirnwand zu verschoben, um dafür zu sorgen, dass die Zentrierhaken 19 in die entsprechenden Zentrierösen 21 einlaufen können.

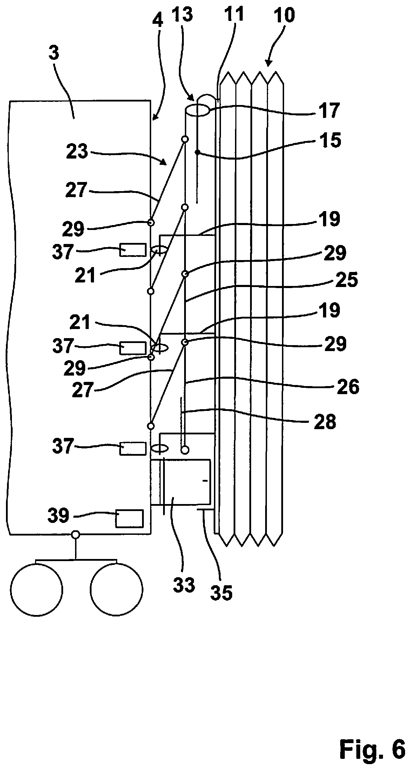

Betrachtet man nun Fig. 6, so erkennt man, dass der mit 33 bezeichnete Riegel sich oberhalb der Lasche 35 befindet, sodass die Seitenschutzwand 10 gegen Herausheben gesichert ist. Hieraus wird im Einzelnen deutlich, dass durch den Riegel 33 in Verbindung mit der Lasche 35 die Zentrierhaken 19 in den Zentrierösen 21 gesichert sind.

Der Holm 25 weist einen nach unten ausgerichteten Verlängerungsabschnitt 26 gegebenenfalls mit einem Griff auf, der dem Verschwenken des Holmes 25 dienen kann. Der Verlängerungsabschnitt 26 zeigt vorteilhaft am unteren Ende eine ausklappbare Sprosse 28, um das Besteigen der als Leiter ausgebildeten Schwenkeinrichtung zu erleichtern.

Es wurde des Weiteren bereits darauf hingewiesen, dass der Eingriff der Zentrierhaken 19 in den Zentrierösen 21 sensorüberwacht ist. Hierzu ist ein Sensor 37 vorgesehen. Auch die Verriegelung der Lasche 35 mit dem Riegel 33 ist sensorüberwacht, weshalb auch hier ein Sensor 39 vorgesehen ist.

Vorteilhaft an der Ausgestaltung einer Kombination aus Leiter als Schwenkeinrichtung 23 und Seitenschutzwand 10 ist, dass im vorliegenden Fall bei geschlossener Seitenschutzwand 10 die Leiter von außen nicht mehr als Leiter erkennbar ist; insofern besteht für unbefugte Dritte auch keinerlei Veranlassung zu versuchen, die Leiter auszuklappen, um gegebenenfalls auf das Dach des Fahrzeugteiles 2,3 zu gelangen. Darüber hinaus erleichtert die Schwenkeinrichtung 23 die Montage der Seitenschutzwand 10; der Versorgungsbereich hinter der Seitenschutzwand 10 ist einfach zugänglich, in dem nämlich lediglich die Leiter ausgeschwenkt wird, die Seitenschutzwand 10 außer Eingriff mit der als Leiter ausgebildeten Schwenkeinrichtung 23 gebracht wird, und dann die Seitenschutzwand 10 soweit zurückgeschoben wird, dass Wartungspersonal in dem Raum hinter der Seitenschutzwand 10 gelangen kann. Da die als Leiter ausgebildete Schwenkeinrichtung 23 Teil der Seitenschutzwand 10 ist, muss diese nicht gesondert an der Stirnwand 4 des Fahrzeugteiles 3 befestigt werden. Dadurch, dass bei der als Leiter ausgebildeten Schwenkeinrichtung 23 im auf die Stirnwand 4 des Fahrzeugteils 3 zugeschwenkten Zustand des Holmes 25 die Sprossen 27 nahezu senkrecht stehen, sind die Sprossen 27 auch gegen Schnee, Eis und Schmutz geschützt.

### Bezugszeichenliste:

- 1: Gelenkfahrzeug
- 2: Fahrzeugteil
- 3: Fahrzeugteil
- 4: Stirnwand
- 5: Übergang
- 6: Aussparung in der Stirnwand
- 7: Anschlag in der Aussparung
- 10: Seitenschutzwand
- 11: Rahmen
- 13: Führungseinrichtung
- 15: Führungsstange
- 17: Führungsöse
- 19: Zentrierhaken
- 21: Zentrierösen
- 23: Schwenkeinrichtung
- 25: Holm
- 26: Verlängerungsabschnitt
- 27: Sprosse
- 27a: Überstand
- 28: ausklappbare Sprosse
- 29: Gelenk
- 31: Pfeil
- 33: Riegel
- 35: Lasche
- 37: Sensor
- 39: Sensor

## Patentansprüche

1. Zwischen zwei gelenkig miteinander verbundenen Fahrzeugteilen (2, 3) angeordnete balgartige Seitenschutzwand (10), wobei die Seitenschutzwand (10) an den gelenkig miteinander verbundenen Fahrzeugteilen (2, 3) anordbar ist, und wobei zwischen mindestens einer Stirnseite der Seitenschutzwand (10) und der Stirnseite des benachbarten Fahrzeugteils (2, 3) eine Schwenkeinrichtung (23) angeordnet ist, **dadurch gekennzeichnet, dass** die Stirnseite der Seitenschutzwand (10) durch eine Führungseinrichtung (13) vertikal beweglich mit der Schwenkeinrichtung (23) in Verbindung bringbar ist,
wobei durch die Schwenkeinrichtung (23) die Stirnseite der Seitenschutzwand (10) auf die Stirnwand des Fahrzeugteils (2, 3) zu bewegbar ist,
und die Stirnseite der Seitenschutzwand (10) durch eine Verriegelungseinrichtung mit der Stirnwand des Fahrzeugteils (2, 3) verbindbar ist.

2. Zwischen zwei gelenkig miteinander verbundenen Fahrzeugteilen (2, 3) angeordnete balgartige Seitenschutzwand (10) nach Anspruch 1,
**dadurch gekennzeichnet,**
**dass** die Schwenkeinrichtung (23) mindestens einen im Einbauzustand vertikal ausgerichteten Holm (25) umfasst, der durch mindestens zwei Sprossen (27) mit der Stirnwand (4) des Fahrzeugteils (2, 3) in Verbindung steht, wobei die Sprossen (27) sowohl an dem Holm (25), als auch an der Stirnwand (4) des Fahrzeugteils (2, 3) gelenkig angeordnet sind.

3. Zwischen zwei gelenkig miteinander verbundenen Fahrzeugteilen (2, 3) angeordnete balgartige Seitenschutzwand (10) nach einem der voranstehenden Ansprüche,
**dadurch gekennzeichnet,**
**dass** mindestens eine Sprosse (27) durch mindestens einen Anschlag 7 in horizontaler Position fixierbar ist.

4. Zwischen zwei gelenkig miteinander verbundenen Fahrzeugteilen (2, 3) angeordnete balgartige Seitenschutzwand (10) nach einem der voranstehenden Ansprüche,
**dadurch gekennzeichnet,**
**dass** die Führungseinrichtung (13) zur Verbindung der Stirnseite der Seitenschutzwand (10) mit der Schwenkeinrichtung (23) ein erstes im Bereich der Stirnseite der Seitenschutzwand (10) angeordnetes Führungsglied umfasst, wobei das erste Führungsglied durch ein an der Schwenkeinrichtung (10) angeordnetes zweites Führungsglied vertikal beweglich aufnehmbar ist.

5. Zwischen zwei gelenkig miteinander verbundenen Fahrzeugteilen (2, 3) angeordnete balgartige Seitenschutzwand (10) nach Anspruch 4,
**dadurch gekennzeichnet,**
**dass** das erste Führungsglied als Führungsstange (15) ausgebildet ist.

6. Zwischen zwei gelenkig miteinander verbundenen Fahrzeugteilen (2, 3) angeordnete balgartige Seitenschutzwand (10) nach Anspruch 4 oder 5,
**dadurch gekennzeichnet,**
**dass** das zweite Führungsglied als Führungsöse 17 ausgebildet ist.

7. Zwischen zwei gelenkig miteinander verbundenen Fahrzeugteilen (2, 3) angeordnete balgartige Seitenschutzwand (10) nach einem der voranstehenden Ansprüche,
**dadurch gekennzeichnet,**
**dass** die Verriegelungseinrichtung mehrere an der Stirnwand (4) der Seitenschutzwand (10) übereinander angeordnete Zentrierhaken (19) aufweist, die mit entsprechenden Zentrierösen (21) an der Stirnwand (4) des Fahrzeugteils in Eingriff bringbar sind.

8. Zwischen zwei gelenkig miteinander verbundenen Fahrzeugteilen (2, 3) angeordnete balgartige Seitenschutzwand (10) nach einem der voranstehenden Ansprüche,
**dadurch gekennzeichnet,**
**dass** die Verriegelungseinrichtung eine Sensorüberwachung umfasst.

9. Zwischen zwei gelenkig miteinander verbundenen Fahrzeugteilen (2, 3) angeordnete balgartige Seitenschutzwand (10) nach Anspruch 8,
**dadurch gekennzeichnet,**
**dass** durch die Sensorüberwachung der Eingriff mindestens eines Zentrierhakens (19) in der Zentrieröse (21) überwachbar ist.

10. Zwischen zwei gelenkig miteinander verbundenen Fahrzeugteilen (2, 3) angeordnete balgartige Seitenschutzwand (10) nach einem der voranstehenden Ansprüche,
**dadurch gekennzeichnet,**
**dass** die Verriegelungseinrichtung eine Arretiereinrichtung umfasst, wobei die Seitenschutzwand (10) in der Geschlossenstellung durch eine Arretiereinrichtung in der Position fixierbar ist.

11. Zwischen zwei gelenkig miteinander verbundenen Fahrzeugteilen (2, 3) angeordnete balgartige Seitenschutzwand (10) nach Anspruch 10,
**dadurch gekennzeichnet,**
**dass** die Arretiereinrichtung eine Lasche (35) und einen verschwenkbaren Riegel (33) umfasst, die miteinander in Eingriff bringbar sind.

12. Zwischen zwei gelenkig miteinander verbundenen Fahrzeugteilen (2, 3) angeordnete balgartige Seitenschutzwand (10) nach Anspruch 11,
**dadurch gekennzeichnet,**
**dass** Lasche (35) an der Stirnseite der Seitenschutzwand (10) und der Riegel (33) an der Stirnwand (4) des Fahrzeugteiles (2, 3) angeordnet sind.

13. Zwischen zwei gelenkig miteinander verbundenen Fahrzeugteilen (2, 3) angeordnete balgartige Seitenschutzwand (10) nach Anspruch 12,
**dadurch gekennzeichnet,**
**dass** die Arretiereinrichtung eine Sensorüberwachung für die Arretierung der Lasche (35) durch den Riegel (33) umfasst.

14. Zwischen zwei gelenkig miteinander verbundenen Fahrzeugteilen (2, 3) angeordnete balgartige Seitenschutzwand (10) nach Anspruch 2 bis 13,
**dadurch gekennzeichnet,**
**dass** der Holm (25) einen im Einbauzustand nach unten gerichteten Verlängerungsabschnitt (26) aufweist, dessen Länge etwa dem vertikalen Versatz nach dem Verschwenken der Schwenkeinrichtung (23) entspricht.

15. Zwischen zwei gelenkig miteinander verbundenen Fahrzeugteilen (2, 3) angeordnete balgartige Seitenschutzwand (10) nach Anspruch 14,
**dadurch gekennzeichnet,**
**dass** der Verlängerungsabschnitt (26) am unteren Ende eine ausklappbare Sprosse (28) aufweist.

## Claims

1. A bellow-type lateral protection wall (10) disposed between two articulately connected vehicle parts (2, 3), wherein the lateral protection wall (10) can be disposed on the articulately connected vehicle parts (2, 3) and wherein a swivel mechanism (23) is disposed between at least one front side of the lateral protection wall (10) and the front side of the adjacent vehicle part (2,3),
**characterized in that**
the front side of the lateral protection wall (10) can be connected with the swivel mechanism (23) by way of a guiding device (13) so that it is vertically movable,
wherein the front side of the lateral protection wall (10) is movable toward the front wall of the vehicle part (2,3) by way of the swivel mechanism (23),
and the front side of the lateral protection wall (10) can be connected with the front wall of the vehicle part (2, 3) by way of a locking mechanism.

2. The bellow-type lateral protection wall (10) disposed between two articulately connected vehicle parts (2, 3) according to claim 1,
**characterized in that**
the swivel mechanism (23) includes at least one stringer (25), which is vertically oriented in the mounted state and which is connected with the front wall (4) of the vehicle part (2, 3) by at least two rungs (27), wherein the rungs (27) are articulately disposed both on the stringer (25) and on the front wall (4) of the vehicle part (2, 3).

3. The bellow-type lateral protection wall (10) disposed between two articulately connected vehicle parts (2, 3) according to one of the afore-mentioned claims,
**characterized in that**
at least one rung (27) can be secured in a horizontal position by at least one limit stop (7).

4. The bellow-type lateral protection wall (10) disposed between two articulately connected vehicle parts (2, 3) according to one of the afore-mentioned claims,
**characterized in that**
the guiding device (13) includes a first guiding member disposed in the area of the front side of the lateral protection wall (10) for connecting the front side of the lateral protection wall (10) with the swivel mechanism (23), wherein the first guiding member can be received in a vertically displaceable manner by a second guiding member disposed at the swivel mechanism (10).

5. The bellow-type lateral protection wall (10) disposed between two articulately connected vehicle parts (2, 3) according to claim 4,
**characterized in that**
the first guiding member is formed as a guide rod (15).

6. The bellow-type lateral protection wall (10) disposed between two articulately connected vehicle parts (2, 3) according to claim 4 or 5,
**characterized in that**
the second guiding member is formed as a guide lug (17).

7. The bellow-type lateral protection wall (10) disposed between two articulately connected vehicle parts (2, 3) according to one of the afore-mentioned claims,
**characterized in that**
the locking device comprises several centring hooks (19), which are disposed above one another on the front wall (4) of the lateral protection protection wall (10) and which can be engaged with corresponding centring lugs (21) at the front wall (4) of the vehicle part.

8. The bellow-type lateral protection wall (10) disposed between two articulately connected vehicle parts (2, 3) according to one of the afore-mentioned claims,
**characterized in that**
the locking device includes a sensor monitoring system.

9. The bellow-type lateral protection wall (10) disposed between two articulately connected vehicle parts (2, 3) according to claim 8,
**characterized in that**
the engagement of at least one centring hook (19) with the centring lug (21) can be monitored by the sensor monitoring system.

10. The bellow-type lateral protection wall (10) disposed between two articulately connected vehicle parts (2, 3) according to one of the afore-mentioned claims,
**characterized in that**
the locking device includes a lock, wherein, in the closed position, the lateral protection wall (10) can be fixed in position by a lock.

11. The bellow-type lateral protection wall (10) disposed between two articulately connected vehicle parts (2, 3) according to claim 10,
**characterized in that**
the lock includes a link (35) and a pivotable latch (33), which can be engaged with one another.

12. The bellow-type lateral protection wall (10) disposed between two articulately connected vehicle parts (2, 3) according to claim 11,
**characterized in that**
the link (35) is disposed at the front side of the lateral protection wall (10) and the latch (33) is disposed at the front wall (4) of the vehicle part (2, 3).

13. The bellow-type lateral protection wall (10) disposed between two articulately connected vehicle parts (2, 3) according to claim 12,
**characterized in that**
the lock includes a sensor monitoring system for locking the latch (33) in the link (35).

14. The bellow-type lateral protection wall (10) disposed between two articulately connected vehicle parts (2, 3) according to claim 2 to 13,
**characterized in that**
the stringer (25) comprises an extension (26) oriented downwards, the length of which corresponds approximately to the vertical displacement after the swivel mechanism (23) has swivelled.

15. The bellow-type lateral protection wall (10) disposed between two articulately connected vehicle parts (2, 3) according to claim 14,
**characterized in that**
the extension (26) comprises a fold-out rung (28) at the lower end.

## Revendications

1. Paroi de protection latérale (10) en forme de soufflet disposée entre deux parties de véhicule (2, 3) reliées de manière articulée, la paroi de protection latérale (10) pouvant être disposée sur les parties de véhicule (2, 3) reliées de manière articulée, et un dispositif de pivotement (23) étant disposé entre au moins un côté frontal de la paroi de protection latérale (10) et le côté frontal de la partie de véhicule (2, 3) voisine,
**caractérisée en ce que**
le côté frontal de la paroi de protection latérale (10) peut être relié de manière verticalement mobile avec le dispositif de pivotement (23) par un dispositif de guidage (13),
le côté frontal de la paroi de protection latérale (10) étant déplaçable en direction de la paroi frontale de la partie de véhicule (2, 3) au moyen du dispositif de pivotement (23),
et le côté frontal de la paroi de protection latérale (10) peut être relié avec la paroi frontale de la partie de véhicule (2, 3) par un dispositif de verrouillage.

2. Paroi de protection latérale (10) en forme de soufflet disposée entre deux parties de véhicule (2, 3) reliées de manière articulée selon la revendication 1,
**caractérisée en ce que**
le dispositif de pivotement (23) comprend au moins un montant (25) orienté verticalement à l'état monté, qui est relié avec la paroi frontale (4) de la partie de véhicule (2, 3) par au moins deux traverses (27), les traverses (27) étant disposées de manière articulée sur le montant (25) et sur la paroi frontale (4) de la partie de véhicule (2, 3).

3. Paroi de protection latérale (10) en forme de soufflet disposée entre deux parties de véhicule (2, 3) reliées de manière articulée selon l'une des revendications précédentes,
**caractérisée en ce que**
au moins une traverse (27) peut être fixée en position horizontale par au moins une butée (7).

4. Paroi de protection latérale (10) en forme de soufflet disposée entre deux parties de véhicule (2, 3) reliées de manière articulée selon l'une des revendications précédentes,
**caractérisée en ce que**
pour relier le côté frontal de la paroi de protection latérale (10) avec le dispositif de pivotement (23), le dispositif de guidage (13) comprend un premier élément de guidage disposé dans la région du côté frontal de la paroi de protection latérale (10), le premier élément de guidage pouvant être reçu de manière verticalement mobile par un second élément de guidage disposé sur le dispositif de pivotement (10).

5. Paroi de protection latérale (10) en forme de soufflet disposée entre deux parties de véhicule (2, 3) reliées de manière articulée selon la revendication 4,
**caractérisée en ce que**
le premier élément de guidage prend la forme d'une barre de guidage (15).

6. Paroi de protection latérale (10) en forme de soufflet disposée entre deux parties de véhicule (2, 3) reliées de manière articulée selon la revendication 4 ou 5
**caractérisée en ce que**
le second élément de guidage prend la forme d'un oeillet de guidage (17).

7. Paroi de protection latérale (10) en forme de soufflet disposée entre deux parties de véhicule (2, 3) reliées de manière articulée selon l'une des revendications précédentes,
**caractérisée en ce que**
le dispositif de verrouillage comporte plusieurs crochets de centrage (19) disposés les uns au-dessus des autres sur la paroi frontale (4) de la paroi de protection latérale (10), les crochets pouvant être mis en prise avec des oeillets de centrage (21) correspondants sur la paroi frontale (4) de la partie de véhicule.

8. Paroi de protection latérale (10) en forme de soufflet disposée entre deux parties de véhicule (2, 3) reliées de manière articulée selon l'une des revendications précédentes,
**caractérisée en ce que**
le dispositif de verrouillage comprend un système de surveillance à capteurs.

9. Paroi de protection latérale (10) en forme de soufflet disposée entre deux parties de véhicule (2, 3) reliées de manière articulée selon la revendication 8,
**caractérisée en ce que**
l'engagement d'au moins un crochet de centrage (19) dans l'oeillet de centrage (21) peut être surveillé par le système de surveillance à capteurs.

10. Paroi de protection latérale (10) en forme de soufflet disposée entre deux parties de véhicule (2, 3) reliées de manière articulée selon l'une des revendications précédentes,
**caractérisée en ce que**
le dispositif de verrouillage comprend un dispositif d'arrêt, la paroi de protection latérale (10), dans sa position fermée, pouvant être fixée en position par un dispositif d'arrêt.

11. Paroi de protection latérale (10) en forme de soufflet disposée entre deux parties de véhicule (2, 3) reliées de manière articulée selon la revendication 10,
**caractérisée en ce que**
le dispositif d'arrêt comprend une languette (35) et un verrou (33) pivotant qui peuvent être mis en prise l'un avec l'autre.

12. Paroi de protection latérale (10) en forme de soufflet disposée entre deux parties de véhicule (2, 3) reliées de manière articulée selon la revendication 11,
**caractérisée en ce que**
la languette (35) est disposée sur le côté frontal de la paroi de protection latérale (10) et le verrou (33) est disposé sur la paroi frontale (4) de la partie de véhicule (2, 3).

13. Paroi de protection latérale (10) en forme de soufflet disposée entre deux parties de véhicule (2, 3) reliées de manière articulée selon la revendication 12,
**caractérisée en ce que**
le dispositif d'arrêt comprend un système de surveillance à capteurs pour le blocage de la languette (35) par le verrou (33).

14. Paroi de protection latérale (10) en forme de soufflet disposée entre deux parties de véhicule (2, 3) reliées de manière articulée selon les revendications 2 à 13,
**caractérisée en ce que**
le montant (25) comporte une section de prolongement (26) orientée vers le bas à l'état monté, dont la longueur correspond approximativement au déplacement vertical après le pivotement du dispositif de pivotement (23).

15. Paroi de protection latérale (10) en forme de soufflet disposée entre deux parties de véhicule (2, 3) reliées de manière articulée selon la revendication 14,
**caractérisée en ce que**
la section de prolongement (26) comporte à son extrémité inférieure une traverse (28) susceptible d'être déployée.
